(19) Europäisches Patentamt / European Patent Office / Office européen des brevets

(11) **EP 4 600 617 B1**

(12) **EUROPÄISCHE PATENTSCHRIFT**

(45) Veröffentlichungstag und Bekanntmachung des Hinweises auf die Patenterteilung:
**08.07.2026   Patentblatt 2026/28**

(21) Anmeldenummer: **24156658.7**

(22) Anmeldetag: **08.02.2024**

(51) Internationale Patentklassifikation (IPC):
**G01F 23/80** *(2022.01)*      *G01F 23/284* *(2006.01)*
*G01F 23/292* *(2006.01)*      *G01F 23/296* *(2022.01)*

(52) Gemeinsame Patentklassifikation (CPC):
**G01F 23/804;** G01F 23/284; G01F 23/292; G01F 23/296

(54) **VERFAHREN ZUM STEUERN EINER MESSDAUER UND/ODER EINES MESSABSTANDS**

METHOD FOR CONTROLLING A MEASUREMENT PERIOD AND/OR A MEASUREMENT DISTANCE

PROCÉDÉ DE COMMANDE D'UNE DURÉE DE MESURE ET/OU D'UNE DISTANCE DE MESURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**13.08.2025   Patentblatt 2025/33**

(73) Patentinhaber: **VEGA Grieshaber KG**
**77709 Wolfach (DE)**

(72) Erfinder:
• **HOFERER, Christian**
**77652 Offenburg (DE)**
• **KAUFMANN, Manuel**
**77791 Berghaupten (DE)**
• **HERRMANN, René**
**77709 Oberwolfach (DE)**

(74) Vertreter: **Maiwald GmbH**
**Engineering**
**Elisenhof**
**Elisenstrasse 3**
**80335 München (DE)**

(56) Entgegenhaltungen:
**US-A1- 2016 169 729      US-A1- 2020 116 798**
**US-A1- 2020 284 640**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft ein Verfahren zum Steuern einer Messdauer, eines Messabstands und/oder eines Tastgrades einer Messung, insbesondere einer Messung, die von einem Füllstandmessgerät durchgeführt wird. Weiterhin betrifft die Erfindung ein nicht-volatiles, computerlesbares Speichermedium, ein Füllstandmessgerät und eine Verwendung.

Hintergrund

Für eine Durchführung einer Messung mittels eines Füllstandmessgeräts oder eines ähnlichen Feldgerätes kann es erforderlich sein, nicht nur Aspekte einer Auswertung der Messung zu beachten, sondern auch weitere Aspekte der Messung, insbesondere einer Messdauer, eines Messabstands und/oder eines Tastgrades der Messung. Dabei kann es nötig sein, sowohl eine Vielzahl von Vorschriften zu beachten, aber auch beispielsweise konkrete aktuelle Zustände des Füllstandmessgeräts. Es ist daher wünschenswert, dass zumindest einige Aspekte, die insbesondere Messdauer und/oder Messabstand betreffen, automatisiert berücksichtigt werden.

Das Dokument US 2020 / 0 284 640 A1 betrifft ein Messsteuerungsprogramm, ein Messsteuerungsverfahren, eine Messsteuerungsvorrichtung und ein Messsteuerungssystem.

Zusammenfassung

Es ist Aufgabe der Erfindung, ein Verfahren zur Verfügung zu stellen, das zumindest einige Aspekte einer Messung, insbesondere mittels eines Füllstandmessgeräts, automatisiert berücksichtigt. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren zum Steuern einer Messdauer, eines Messabstands und/oder eines Tastgrades einer Messung eines Füllstandmessgeräts, wobei das Steuern ein Bestimmen eines Startzeitpunkts und eines Endzeitpunkts der Messung umfasst, das Verfahren aufweisend die Schritte:

speichern einer Vielzahl von Messdauern und Messabständen von mindestens zwei vorangegangenen Messungen;
bestimmen eines aktuellen zeitlichen Messabstands und einer Vielzahl von aktuellen Restriktionen, wobei die Vielzahl von aktuellen Restriktionen mindestens einen minimalen Messabstand umfasst;
berechnen des Startzeitpunkts der Messung, aus dem aktuellen Messabstand, der Vielzahl von Messdauern und Messabständen und der Vielzahl von aktuellen Restriktionen;
starten der Messung zu dem berechneten Startzeitpunkt;
berechnen des Endzeitpunkts der Messung, aus dem Startzeitpunkt, der Vielzahl von Messdauern und Messabständen und der Vielzahl von aktuellen Restriktionen; und
beenden der Messung zu dem berechneten Endzeitpunkt.

Die Messdauer $T_a$ ist eine Zeitspanne, während derer der Sender und/oder der Empfänger aktiv ist. Für Messverfahren, bei denen der Sender die meiste Energie verbraucht - z.B. bei einem Radarfüllstandmessgerät - kann es sinnvoll sein, nur die Zeitspanne zu verwenden, in welcher der Sender aktiv ist. Für Messverfahren, bei denen der Empfänger die meiste Energie verbraucht - z.B. bei einem radiometrischen Messgerät - kann es sinnvoll sein, nur die Zeitspanne zu verwenden, in welcher der Empfänger aktiv ist. Der Messabstand $T_p$ ist eine Zeitspanne, während derer der Sender und/oder der Empfänger nicht aktiv ist oder pausiert. Der Tastgrad, Aussteuergrad oder "Duty Cycle" dc ist ein Verhältnis zwischen Aktivität und Pause von Sender und/oder Empfänger:

$$dc = T_a / (T_a + T_p)$$

Das Füllstandmessgerät ist ein Feldgerät zur Prozessautomatisierung, das dazu geeignet und/oder eingerichtet ist, eine Messung beispielsweise eines Füllstands, einer Topologie und/oder eines Grenzstands eines Mediums oder Füllgutes durchzuführen. Das Medium oder Füllgut kann z.B. in einem Behälter von beliebiger Form angeordnet sein, oder auch z.B. ein Fluss sein, dessen Pegel bestimmt wird. Das Füllstandmessgerät kann eine oder mehrere Funktionseinheiten umfassen, welche zum Steuern der Messdauer $T_a$, des Messabstands $T_p$ und/oder eines Tastgrades dc einer Messung eines Füllstandmessgeräts eingerichtet sind. Darüber hinaus kann es eine oder mehrere Funktionseinheiten umfassen, welche dazu eingerichtet sind, die Messung zu überwachen und/oder zu protokollieren, insbesondere zu speichern. Das Speichern kann Speichern einer Vielzahl von Messdauern und Messabständen von mindestens zwei vorangegangenen Messungen beinhalten. Das Speichern kann kumulativ über einen längeren Zeitraum erfolgen und/oder mittels einer "sliding window" Technik über eine vordefinierte Anzahl von vorangegangenen Messungen.

Darüber hinaus können eine oder mehrere Funktionseinheiten vorgesehen sein, um einen aktuellen Messabstand zu bestimmen, d.h. einen zeitlichen Abstand zum Ende der letzten Messung. Weiterhin kann das Füllstandmessgerät eine oder mehrere Funktionseinheiten umfassen, welche eine Vielzahl von aktuellen Restriktionen gespeichert haben und/oder überwachen. z.B. in einer Datenbank oder in einer Tabelle gespeichert sein. Die Vielzahl von aktuellen Restriktionen kann über einen längeren Zeitraum unverändert sein oder veränderlich sein, z.B. nach jeder Messung oder in einem anderen Intervall. Die Vielzahl von aktuellen Restriktionen kann mindestens einen minimalen Messabstand umfassen. Aus dem aktuellen Messabstand, der Vielzahl von Messdauern und Messabständen und der Vielzahl von aktuellen Restriktionen kann der Startzeitpunkt $t_s$ der Messung, d.h. der nächsten durchzuführenden Messung, berechnet werden. Wenn der restriktivste aktuelle Messabstand erfüllt ist, wird die Messung zu dem berechneten Startzeitpunkt gestartet. Insbesondere können Messungen nur dann initiiert werden, wenn die Restriktionen eines Duty Cycles eingehalten werden. Ist dies (noch) nicht der Fall, kann die Messung verhindert oder verschoben werden, und/oder kann eine Störmeldung ausgegeben werden.

Spätestens nach dem Starten der Messung wird der Endzeitpunkt der Messung berechnet. Der Endzeitpunkt kann aus dem Startzeitpunkt, der (gespeicherten) Vielzahl von historischen Messdauern und Messabständen und der Vielzahl von aktuellen Restriktionen berechnet werden. Es kann vorgesehen sein, dass eine Messung vorzeitig abgebrochen wird, d.h. dass ein Update des Endzeitpunkts während der Messung stattfindet, beispielsweise wenn eine Energiequelle während der Messung einen kritischen Ladezustand erreicht. Zu dem berechneten Endzeitpunkt, d.h. wenn die restriktivste aktuelle Messdauer erfüllt ist, wird die Messung beendet.

Die Berechnung der Werte Messdauer, Messabstands und/oder Tastgrad kann "nur intern", d.h. ausschließlich von Komponenten des Füllstandmessgeräts, durchgeführt werden. Alternativ oder zusätzlich ist eine externe Beeinflussung möglich, beispielsweise dadurch, dass zumindest ein Teil der Berechnungen von einem anderen, "externen" Gerät - z.B. einem Server, einer Cloud und/oder einem mobilen Gerät - vorgenommen wird. Dabei kann das externe Gerät insbesondere dazu eingerichtet sein, weitere Restriktionen und/oder Einflussgrößen zu berücksichtigen, beispielsweise ein Erkennen eines Risikos und/oder ein Senden eines "Nothalt" Signals.

Durch dieses Verfahren wird es vorteilhafterweise möglich, zumindest einige Aspekte einer Messung automatisiert zu berücksichtigen und diese Aspekte, insbesondere in Echtzeit, zum Steuern der Messdauer der nächsten Messung, des Messabstands zur letzten Messung und/oder zum Einhalten des Tastgrades der Messung und/oder einer Messreihe verwenden zu können. Dabei kann, weiter vorteilhaft, der Umfang der berücksichtigten Restriktionen auf die konkreten Umstände der Messung in flexibler Weise abgestimmt werden.

In einigen Ausführungsformen umfassen die aktuellen Restriktionen eine maximale Messdauer und/oder einen minimalen Messabstand. Dabei kann es sich um eine "generelle" Obergrenze bzw. Untergrenze handeln - z.B. um eine Obergrenze bzw. Untergrenze, die für einen bestimmten Typ von Feldgeräten sich als günstig erwiesen hat - und/oder um ein spezifisches Update, das neueste Erkenntnisse berücksichtigt.

In einigen Ausführungsformen ist der aktuelle Messabstand ein zufälliger Wert zwischen dem minimalen Messabstand und einem vordefinierten maximalen Messabstand. Dabei kann der vordefinierte maximale Messabstand einstellbar sein. Die Wahl des zufälligen Wertes kann vorteilhafterweise dazu beitragen, um Kollisionen des Messsignals mit anderen Füllstandmessgeräten zu vermeiden.

In einigen Ausführungsformen umfassen die aktuellen Restriktionen einen maximalen Tastgrad oder "Duty Cycle". Bei Füllstandmessgeräten, die mehrere Messungen hintereinander durchführen (sogenannte "Chirp Sequence") kann vorgesehen sein, dass in Summe aller Chirps der Duty Cycle eingehalten wird. Ein maximaler Tastgrad kann in zumindest einigen Ländern in einer gesetzlichen Vorschrift definiert sein.

In einigen Ausführungsformen wird zumindest eine der aktuellen Restriktionen aus einem Land und/oder einem Ort des Betriebs des Füllstandmessgeräts abgeleitet. Das Land bzw. der Ort des Betriebs kann dabei eingegeben werden und/oder mittels einer speziellen Funktion - z.B. mittels eines Positionsbestimmungssystems wie GPS (Global Positioning System), einer spezifischen Abfrage von einer Datenbank und/oder mittels eines Ethernet-Kommands, etc. - ermittelt werden. Dabei kann das Land bzw. Ort des Betriebs zyklisch ermittelt und gegebenenfalls die Konfiguration der Steuerung bei einer Änderung des Orts angepasst werden. Diese aktuellen Restriktionen können z.B. Vorschriften, insbesondere gesetzliche Vorschriften, zu einer maximalen Sendeleistung, zu einem maximalen Tastgrad und/oder weitere Vorschriften umfassen.

In einigen Ausführungsformen wird zumindest eine der aktuellen Restriktionen aus einer Positionierung des Füllstandmessgeräts abgeleitet, nämlich ob das Füllstandmessgerät in einem geschlossenen Behälter oder in einem Freifeld angeordnet ist. Darüber hinaus kann die Lage des Füllstandmessgeräts, insbesondere des Sensors berücksichtigt werden: Wenn Radarwellen z.B. in Richtung Boden ausgestrahlt werden, dann darf mehr Energie abgestrahlt werden. Wenn Radarwellen z.B. horizontal ausgestrahlt werden, dann sind geringe Grenzwerte einzuhalten und die mittlere Leistung muss reduziert werden und/oder die Pausenzeit $T_p$ muss verlängert werden, da ein Risiko besteht, dass sich Menschen im Bereich der abgestrahlten Radarwellen befinden.

In einigen Ausführungsformen wird zumindest eine der aktuellen Restriktionen aus einem Ladezustand eines Energiespeichers abgeleitet. Der Energiespeicher kann aufladbar sein, zum Beispiel ein Akku und/oder ein Kondensator. Wenn beispielsweise eine Energiequelle während der Messung einen kritischen Ladezustand erreicht, kann die Messdauer verkürzt werden, d.h. in zumindest einigen Fällen kann die Messung vorzeitig abgebrochen werden.

In einigen Ausführungsformen wird zumindest eine der aktuellen Restriktionen aus einer prognostizierten Sendeleistung und/oder Sendedauer eines Füllstandsensors abgeleitet. Beispielsweise kann eine Faustregel "je stärker oder länger das Feldgerät sendet, desto seltener darf es senden" implementiert sein. Dadurch kann vorteilhafterweise z.B. ein guter Kompromiss zwischen erzielbarer Qualität der Messung und Energieverbrauch realisiert werden.

In einigen Ausführungsformen erfolgt das Bestimmen und/oder das Speichern der Vielzahl von historischen Messdauern, von historischen Messabständen und/oder des aktuellen Messabstands mittels eines Timers. Der Timer kann dazu eingerichtet sein, Messdauer, Messabstand und/oder Tastgrades der Messung und/oder einer Vielzahl von Messungen zu bestimmen. Der Timer kann als eine separate und/oder eigenständige Komponente in dem Füllstandmessgerät realisiert sein. Der Timer kann redundant ausgelegt sein. Der Timer kann in Software und/oder als eine spezialisierte Hardware realisiert sein, beispielsweise als ein FPGA (Field Programmable Gate Array) oder als eine Analog-Komponente. Der Timer kann als Teil eines SoC (System-on-a-Chip) realisiert sein.

In einigen Ausführungsformen kann die maximale Messdauer, der minimale Messabstand, der maximale Tastgrad und/oder der vordefinierte maximale Messabstand über ein Display und/oder ein Bedientool, als Zeitwert und/oder als Prozentwert, eingegeben werden. Dabei kann die Eingabe der Konfiguration über einen Login erfolgen und in einem Inbetriebnahmeprotokoll festgehalten werden. Das Bedientool kann drahtlos und/oder drahtgebunden an das Füllstandmessgerät angeschlossen sein.

In einigen Ausführungsformen sind zumindest einige aus der Vielzahl von aktuellen Restriktionen als Tabelle, insbesondere als veränderliche (update-fähige) Tabelle, gespeichert. Die Tabelle kann z.B. als Lookup-Table, als XML-basierte Tabelle (XML: Extensible Markup Language) und/oder als anderer Typ von Tabelle gespeichert sein. Es kann eine spezielle Schnittstelle, z.B. SOAP (Simple Object Access Protocol) zum Update der Tabelle vorgesehen sein. Die Tabelle kann normative Vorgaben enthalten, z.B. Rahmenbedingung, unter denen ein Sensor in einem bestimmten Land senden darf. Die Tabelle kann für ein bestimmtes Land oder einen Ort z.B. Frequenzbänder, Sendestärke, Bandbreite und/oder weitere Angaben beinhalten. Damit kann insbesondere sichergestellt werden, dass gesetzliche Vorgaben von dem Feldgerät eingehalten werden.

Ein Aspekt betrifft ein nicht-volatiles, computerlesbares Speichermedium mit einem darin gespeicherten Programm, das, wenn es auf einem Prozessor eines Füllstandmessgeräts ausgeführt wird, das Füllstandmessgerät anweist, die Schritte eines Verfahrens wie oben und/oder nachfolgend beschrieben auszuführen.

Ein Aspekt betrifft ein Füllstandmessgerät, das zur Durchführung eines Verfahrens wie oben und/oder nachfolgend beschrieben eingerichtet ist. Das Füllstandmessgerät weist ein Sensorfrontend auf, das zur Durchführung einer Messung eingerichtet ist. Das Sensorfrontend kann ein Hochfrequenzfrontend sein, insbesondere ein Radarfrontend, ein Ultraschallfrontend, ein LiDAR- oder ein Laserfrontend, und/oder ein radiometrisches Frontend. Das Füllstandmessgerät weist weiterhin eine Steuer- und Auswerteeinheit auf, die zur Steuerung und/oder zur Auswertung der Messung eingerichtet ist. Ferner weist das Füllstandmessgerät einen Timer auf, der zur Überwachung einer Messdauer, eines Messabstands und/oder eines Tastgrades der Messung eingerichtet ist.

In einigen Ausführungsformen weist das Sensorfrontend eine Vielzahl von Sendern und/oder Empfängern auf. Bei Geräten, deren Sensorfrontend z.B. mehrere Radarchips aufweist, kann die Steuerung dafür sorgen, dass in Summe aller Chips die Restriktionen eingehalten werden. Eine Ausführungsform des Füllstandmessgeräts kann z.B. vorsehen, dass ein Chip (z.B. als RSoC, Radar System on Chip) zur Erfassung von Gesten verwendet werden kann, um auf diese Weise eine Steuerung mittels Gesten zu realisieren. Auch in dieser Ausführungsform darf eine maximale Sendedauer nicht überschritten werden.

Ein Aspekt betrifft eine Verwendung eines Füllstandmessgeräts wie oben und/oder nachfolgend beschrieben zur Füllstandmessung, zur Topologiebestimmung und/oder zur Grenzstandbestimmung.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

Kurze Beschreibung der Figuren

Dabei zeigt:

**Fig. 1** schematisch ein Füllstandmessgerät gemäß einer Ausführungsform;
**Fig. 2** schematisch Messzyklen gemäß einer Ausführungsform;
**Fig. 3** schematisch eine Steuerung der Messzyklen gemäß einer Ausführungsform;
**Fig. 4** schematisch eine Steuerung der Messzyklen gemäß einer Ausführungsform;
**Fig. 5** schematisch eine Steuerung der Messzyklen gemäß einer Ausführungsform;
**Fig. 6** ein Flussdiagramm mit einem Verfahren gemäß einer Ausführungsform.

Detaillierte Beschreibung von Ausführungsformen

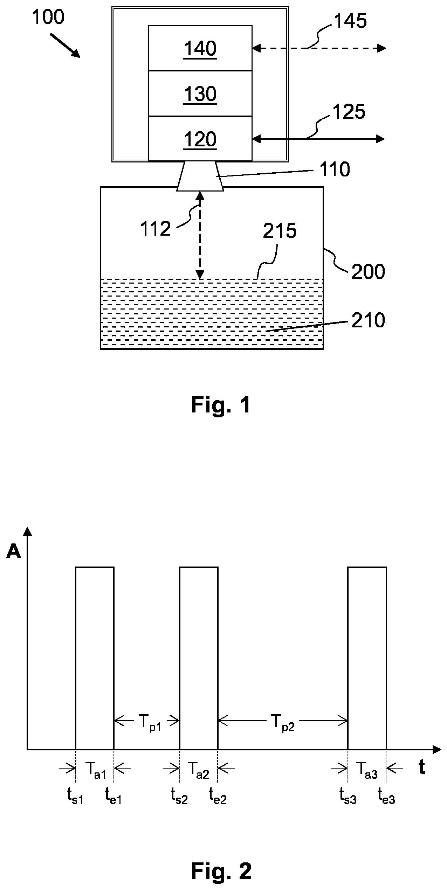

Fig. 1 zeigt schematisch ein Füllstandmessgerät 100 gemäß einer Ausführungsform. Das Füllstandmessgerät 100 weist ein Sensorfrontend 110 auf, das zur Durchführung einer Messung wie oben und/oder nachfolgend beschrieben eingerichtet ist. Das Sensorfrontend 110 kann ein Hochfrequenzfrontend sein, insbesondere ein Radarfrontend, ein Ultraschallfrontend, ein LiDAR- oder ein Laserfrontend, und/oder ein radiometrisches Frontend. Das Sensorfrontend 110 ist in dem gezeigten Ausführungsbeispiel schematisch in Form einer Hornantenne dargestellt, welche Radarwellen 112 auf ein Füllgut 210 in einem Behälter 200 aussendet. Die Radarwellen 112 werden zumindest von der Füllgutoberfläche 215 reflektiert. Die reflektierten Radarwellen 112 werden von dem Sensorfrontend 110 empfangen und von einer Steuer- und Auswerteeinheit 120 ausgewertet. Die Steuer- und Auswerteeinheit 120 übernimmt weiterhin die Steuerung der Messung. Das Füllstandmessgerät 100 weist weiterhin einen Timer 130 auf, der zur Überwachung einer Messdauer, eines Messabstands und/oder eines Tastgrades der Messung eingerichtet ist. Der Timer 130 kann zumindest teilweise als Teil der Steuer- und Auswerteeinheit 120 realisiert sein (z.B. als Funktionsblock in Software) und/oder kann als eine separate und/oder eigenständige Komponente in dem Füllstandmessgerät. Der Timer kann redundant ausgelegt sein. Der Timer kann in Software und/oder als eine spezialisierte Hardware realisiert sein, beispielsweise als ein FPGA (Field Programmable Gate Array) oder als eine Analog-Komponente. Der Timer kann als Teil eines SoC (System-on-a-Chip) realisiert sein. Die Daten des Füllstandmessgeräts 100 - z.B. Messwerte - können über eine Kommunikationsschnittstelle 125 weitergeleitet werden. Die Kommunikationsschnittstelle 125 kann drahtlos und/oder drahtgebunden realisiert sein. Die Kommunikationsschnittstelle 125 kann in einer Ausführungsform auch zur Übertragung von Energie an einen Energiespeicher 140 vorgesehen sein. Die Kommunikationsschnittstelle 125 kann in einer Ausführungsform auch zum Anschluss eines Bedientools vorgesehen sein. Alternativ oder zusätzlich kann die Energie über eine Leitung 145 übertragen werden.

**Fig. 2** zeigt schematisch Messzyklen gemäß einer Ausführungsform. Ein erster Messzyklus oder eine erste Messung weist eine Messdauer $T_{a1}$ auf, zwischen einem Startzeitpunkt $t_{s1}$ und einem Endezeitpunkt $t_{e1}$. Eine zweite Messung weist eine Messdauer $T_{a2}$ auf, und eine dritte Messung eine Messdauer $T_{a3}$, mit den jeweiligen Startzeitpunkten $t_{s2}$ und $t_{s3}$ und den jeweiligen Startzeitpunkten $t_{e2}$ und $t_{e3}$. Zwischen den Messungen sind Messabstände oder Pausendauern $T_{p1}$ und $T_{p2}$ eingefügt. Ein kumulierter Tastgrad dc der ersten und zweiten Messung berechnet sich zu:

$$dc_{sum} = (T_{a1} + T_{a2}) \, / \, (T_{a1} + T_{a2} + T_{p1} + T_{p2})$$

Die Abstände $T_{p1}$ und $T_{p2}$ zwischen den Messzyklen sind nicht maßstäblich dargestellt. In zumindest einigen Ausführungsformen kann der kumulierte Tastgrad etwa 1 % betragen.

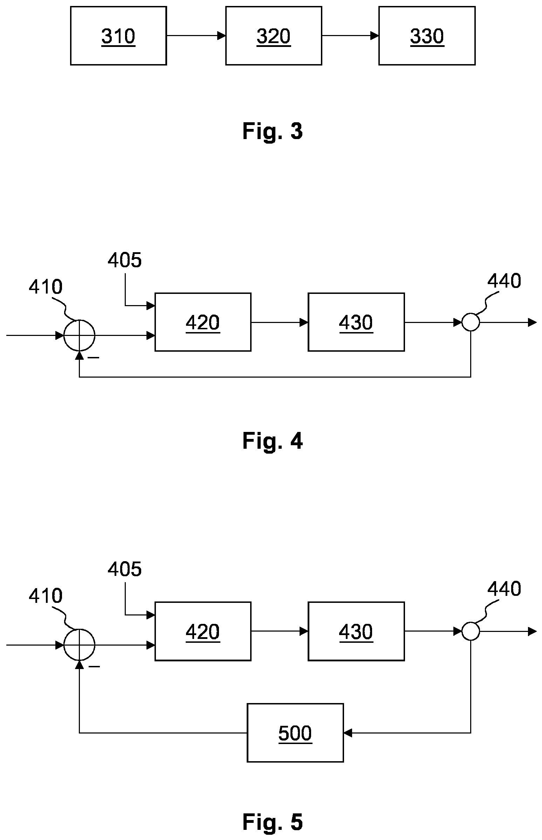

**Fig. 3** zeigt schematisch eine Steuerung der Messzyklen gemäß einer Ausführungsform. Bezugszeichen 310 bezeichnet eine Konfiguration der Steuerung. Die Konfiguration der Steuerung kann initial, vor jeder Messung, in vordefinierten Abständen und/oder ereignisbasiert durchgeführt werden. 320 bezeichnet ein Berechnen des Startzeitpunkts $t_s$ und ein Starten der Messung, inkl. Erzeugung, Senden und Empfangen des Messsignals. 330 bezeichnet ein Berechnen des Endzeitpunkts der Messung und Beenden der Messung, inkl. einer Bestimmung eines Messwertes.

**Fig. 4** zeigt schematisch eine Steuerung der Messzyklen, insbesondere eines "Duty Cycle", gemäß einer Ausführungsform. 405 bezeichnet eine Konfiguration der Regelung. 420 bezeichnet einen Regler. 430 bezeichnet eine Messung, inkl. Erzeugung, Senden, Empfangen des Messsignals und Bestimmung des Messwertes. 440 bezeichnet einen Rückkopplungspunkt, der zur Einspeisung der Abweichung in 410 verwendet wird.

**Fig. 5** zeigt schematisch eine Steuerung der Messzyklen gemäß einer Ausführungsform. Gleiche Bezugszeichen wie bei **Fig. 4** bezeichnen gleiche oder ähnliche Komponenten. **Fig. 5** weist gegenüber **Fig. 4** eine zusätzliche Komponente 500 auf, die zur Überwachung und/oder Protokollierung des Duty Cycle eingerichtet ist. Alternativ oder zusätzlich kann die Komponente 500 eine Störmeldung erzeugen und über eine Kommunikationsschnittstelle übertragen.

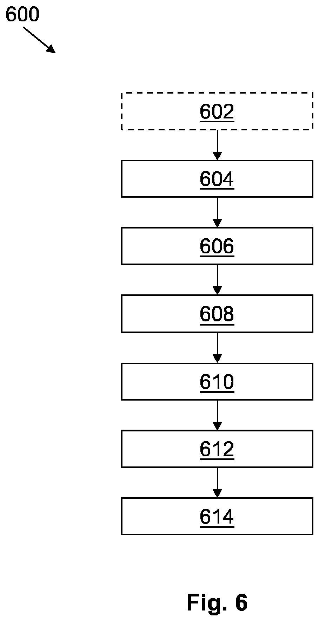

**Fig. 6** zeigt ein Flussdiagramm 600 mit einem Verfahren gemäß einer Ausführungsform. In einem optionalen Schritt 602 werden die aktuellen Restriktionen einer Messung konfiguriert. In einem Schritt 604 wird einer Vielzahl von Messdauern $T_a$ und Messabständen $T_p$ von mindestens zwei vorangegangenen Messungen gespeichert. In einem Schritt 606 wird ein aktueller Messabstand $T_p$ und eine Vielzahl von aktuellen Restriktionen bestimmt, wobei die Vielzahl von aktuellen Restriktionen mindestens einen minimalen Messabstand $T_p$ umfasst. In einem Schritt 608 wird der Startzeitpunkt $t_s$ der Messung berechnet, aus dem aktuellen Messabstand $T_p$, der Vielzahl von Messdauern $T_a$ und Messabständen $T_p$ und der Vielzahl von aktuellen Restriktionen. In einem Schritt 610 wird die Messung zu dem berechneten Startzeitpunkt $t_s$ gestartet. In einem Schritt 612 wird der Endzeitpunkt $t_e$ der Messung berechnet, aus dem Startzeitpunkt $t_s$, der Vielzahl von Messdauern $T_a$ und Messabständen $T_p$ und der Vielzahl von aktuellen Restriktionen. In einem Schritt 614 wird die Messung zu dem berechneten Endzeitpunkt $t_e$ beendet.

**Patentansprüche**

1. Verfahren zum Steuern einer Messdauer ($T_a$), eines Messabstands ($T_p$) und/oder eines Tastgrades einer Messung eines Füllstandmessgeräts (100), wobei das Steuern ein Bestimmen eines Startzeitpunkts

($t_s$) und eines Endzeitpunkts ($t_e$) der Messung umfasst, das Verfahren aufweisend die Schritte:

speichern einer Vielzahl von Messdauern ($T_a$) und Messabständen ($T_p$) von mindestens zwei vorangegangenen Messungen;
bestimmen eines aktuellen zeitlichen Messabstands ($T_p$) und einer Vielzahl von aktuellen Restriktionen, wobei die Vielzahl von aktuellen Restriktionen mindestens einen minimalen Messabstand ($T_p$) umfasst;
berechnen des Startzeitpunkts ($t_s$) der Messung, aus dem aktuellen Messabstand ($T_p$), der Vielzahl von Messdauern ($T_a$) und Messabständen ($T_p$) und der Vielzahl von aktuellen Restriktionen;
starten der Messung zu dem berechneten Startzeitpunkt ($t_s$);
berechnen des Endzeitpunkts ($t_e$) der Messung, aus dem Startzeitpunkt ($t_s$), der Vielzahl von Messdauern ($T_a$) und Messabständen ($T_p$) und der Vielzahl von aktuellen Restriktionen; und
beenden der Messung zu dem berechneten Endzeitpunkt ($t_e$).

2. Verfahren nach Anspruch 1,
wobei die aktuellen Restriktionen eine maximale Messdauer ($T_a$) umfassen.

3. Verfahren nach Anspruch 2,
wobei der aktuelle Messabstand ($T_p$) ein zufälliger Wert zwischen dem minimalen Messabstand und einem vordefinierten maximalen Messabstand ist.

4. Verfahren nach Anspruch 1,
wobei die aktuellen Restriktionen einen maximalen Tastgrad umfassen.

5. Verfahren nach Anspruch 1,
wobei zumindest eine der aktuellen Restriktionen aus einem Land und/oder einem Ort des Betriebs des Füllstandmessgeräts (100) abgeleitet wird.

6. Verfahren nach Anspruch 1,
wobei zumindest eine der aktuellen Restriktionen aus einer Positionierung des Füllstandmessgeräts (100) abgeleitet wird, nämlich ob das Füllstandmessgerät (100) in einem geschlossenen Behälter oder in einem Freifeld angeordnet ist.

7. Verfahren nach Anspruch 1,
wobei zumindest eine der aktuellen Restriktionen aus einem Ladezustand eines Energiespeichers abgeleitet wird.

8. Verfahren nach Anspruch 1,
wobei zumindest eine der aktuellen Restriktionen aus einer prognostizierten Sendeleistung und/oder Sendedauer eines Füllstandsensors (110) abgeleitet wird.

9. Verfahren nach Anspruch 1,
wobei das Bestimmen und/oder das Speichern der Vielzahl von historischen Messdauern ($T_a$), von historischen Messabständen ($T_p$) und/oder des aktuellen Messabstands ($T_p$) mittels eines Timers (130) erfolgt.

10. Verfahren nach Anspruch 1,
wobei eine maximale Messdauer ($T_a$), der minimale Messabstand ($T_p$), ein maximaler Tastgrad und/oder ein vordefinierter maximaler Messabstand über ein Display und/oder ein Bedientool, als Zeitwert und/oder als Prozentwert, eingegeben werden kann.

11. Verfahren nach Anspruch 1,
wobei zumindest einige aus der Vielzahl von aktuellen Restriktionen als Tabelle, insbesondere als veränderliche Tabelle, gespeichert ist.

12. Nicht-volatiles, computerlesbares Speichermedium mit einem darin gespeicherten Programm, das, wenn es auf einem Prozessor eines Füllstandmessgeräts (100) ausgeführt wird, das Füllstandmessgerät (100) anweist, die Schritte gemäß einem der vorhergehenden Ansprüche auszuführen.

13. Füllstandmessgerät (100), eingerichtet zur Durchführung eines Verfahrens gemäß einem der Ansprüche 1 - 11, das Füllstandmessgerät (100) aufweisend:

ein Sensorfrontend (110), eingerichtet zur Durchführung einer Messung;
eine Steuer- und Auswerteeinheit (120), eingerichtet zur Steuerung und/oder zur Auswertung der Messung; und
einen Timer (130), eingerichtet zur Überwachung einer Messdauer ($T_a$), eines Messabstands ($T_p$) und/oder eines Tastgrades der Messung.

14. Füllstandmessgerät (100) nach Anspruch 13,
wobei das Sensorfrontend (110) eine Vielzahl von Sendern und/oder Empfängern aufweist.

15. Verwendung eines Füllstandmessgeräts (100) nach Anspruch 13 oder 14 zur Füllstandmessung, zur Topologiebestimmung und/oder zur Grenzstandbestimmung.

**Claims**

1. A method for controlling a measurement duration

$(T_a)$, a measurement interval $(T_p)$ and/or a duty cycle of a measurement of a level measuring device (100), wherein the control comprises determining a start time $(t_s)$ and an end time $(t_e)$ of the measurement, the method comprising the steps of:

storing a plurality of measurement durations $(T_a)$ and measurement intervals $(T_p)$ of at least two previous measurements;

determining a current measurement interval $(T_p)$ and a plurality of current constraints, wherein the plurality of current constraints comprises at least one minimum measurement interval $(T_p)$;

calculating the start time $(t_s)$ of the measurement from the current measurement interval $(T_p)$, the plurality of measurement durations $(T_a)$ and measurement intervals $(T_p)$, and the plurality of current constraints;

starting the measurement at the calculated start time $(t_s)$;

calculating the end time $(t_e)$ of the measurement, based on the start time $(t_s)$, the plurality of measurement durations $(T_a)$ and measurement intervals $(T_p)$, and the plurality of current restrictions; and

terminating the measurement at the calculated end time $(t_e)$.

2. The method according to claim 1,
wherein the current restrictions comprise a maximum measurement duration $(T_a)$.

3. The method according to claim 2,
wherein the current measurement interval $(T_p)$ is a random value between the minimum measurement interval and a predefined maximum measurement interval.

4. The method according to claim 1,
wherein the current restrictions comprise a maximum duty cycle.

5. The method according to claim 1,
wherein at least one of the current restrictions is derived from a country and/or a location of operating the level measuring device (100).

6. The method according to claim 1,
wherein at least one of the current restrictions is derived from a positioning of the level sensor (100), namely whether the level sensor (100) is located in a closed container or in an open field.

7. The method according to claim 1,
wherein at least one of the current restrictions is derived from a charge state of an energy storage device.

8. The method according to claim 1,
wherein at least one of the current restrictions is derived from a predicted transmission power and/or a transmission duration of a level sensor (110).

9. The method according to claim 1,
wherein the determining and/or storing of the plurality of historical measurement durations $(T_a)$, historical measurement intervals $(T_p)$ and/or the current measurement interval $(T_p)$ is carried out by means of a timer (130).

10. The method according to claim 1,
wherein a maximum measurement duration $(T_a)$, the minimum measurement interval $(T_p)$, a maximum duty cycle and/or a predefined maximum measurement interval can be entered via a display and/or an operating tool, as a time value and/or as a percentage value.

11. The method according to claim 1,
wherein at least some of the plurality of current restrictions are stored as a table, in particular as a variable table.

12. A non-volatile, computer-readable storage medium having a program stored thereon which, when executed on a processor of a level measuring device (100), instructs the level measuring device (100) to perform the steps according to one of the preceding claims.

13. A level measurement device (100) configured to perform a method according to any one of claims 1 - 11, the level measurement device (100) comprising:

a sensor front-end (110) configured to perform a measurement;

a control and evaluation unit (120) configured to control and/or evaluate the measurement; and

a timer (130) configured to monitor a measurement duration $(T_a)$, a measurement interval $(T_p)$ and/or a duty cycle of the measurement.

14. The level measuring device (100) according to claim 13,
wherein the sensor front end (110) comprises a plurality of transmitters and/or receivers.

15. Use of a level measuring device (100) according to claim 13 or 14 for level measurement, for topology determination and/or for limit level determination.

**Revendications**

1. Procédé de commande d'une durée de mesure $(T_a)$,

d'un intervalle de mesure ($T_p$) et/ou d'un rapport cyclique d'une mesure effectuée par un appareil de mesure de niveau de remplissage (100), la commande comprenant une détermination d'un instant de début ($t_s$) et d'un instant de fin ($t_e$) de la mesure, le procédé présentant les étapes consistant à :

mémoriser une pluralité de durées de mesure ($T_a$) et d'intervalles de mesure ($T_p$) d'au moins deux mesures précédentes ;
déterminer un intervalle de mesure temporel actuel ($T_p$) et une pluralité de restrictions actuelles, la pluralité de restrictions actuelles comprenant au moins un intervalle de mesure minimal ($T_p$) ;
calculer l'instant de début ($t_s$) de la mesure à partir de l'intervalle de mesure actuel ($T_p$), de la pluralité de durées de mesure ($T_a$) et d'intervalles de mesure ($T_p$) et de la pluralité de restrictions actuelles ;
démarrer la mesure à l'instant de début calculé ($t_s$) ;
calculer l'instant de fin ($t_e$) de la mesure à partir de l'instant de début ($t_s$), de la pluralité de durées de mesure ($T_a$) et d'intervalles de mesure ($T_p$) et de la pluralité de restrictions actuelles ; et
terminer la mesure à l'instant de fin calculé ($t_e$).

2. Procédé selon la revendication 1,
dans lequel les restrictions actuelles comprennent une durée de mesure maximale ($T_a$).

3. Procédé selon la revendication 2,
dans lequel l'intervalle de mesure actuel ($T_p$) est une valeur aléatoire comprise entre l'intervalle de mesure minimal et un intervalle de mesure maximal prédéfini.

4. Procédé selon la revendication 1,
dans lequel les restrictions actuelles comprennent un rapport cyclique maximal.

5. Procédé selon la revendication 1,
dans lequel au moins l'une des restrictions actuelles est dérivée d'un pays et/ou d'un lieu d'exploitation de l'appareil de mesure de niveau de remplissage (100).

6. Procédé selon la revendication 1,
dans lequel au moins l'une des restrictions actuelles est dérivée d'un positionnement de l'appareil de mesure de niveau de remplissage (100), à savoir si l'appareil de mesure de niveau de remplissage (100) est disposé dans un réservoir fermé ou en champ libre.

7. Procédé selon la revendication 1,

dans lequel au moins l'une des restrictions actuelles est dérivée d'un état de charge d'un accumulateur d'énergie.

8. Procédé selon la revendication 1,
dans lequel au moins l'une des restrictions actuelles est dérivée d'une puissance d'émission et/ou d'une durée d'émission prédites d'un capteur de niveau de remplissage (110).

9. Procédé selon la revendication 1,
dans lequel la détermination et/ou la mémorisation de la pluralité de durées de mesure historiques ($T_a$), d'intervalles de mesure historiques ($T_p$) et/ou de l'intervalle de mesure actuel ($T_p$) s'effectuent au moyen d'un minuteur (130).

10. Procédé selon la revendication 1,
dans lequel une durée de mesure maximale ($T_a$), l'intervalle de mesure minimal ($T_p$), un rapport cyclique maximal et/ou un intervalle de mesure maximal prédéfini peuvent être entrés via un écran et/ou un outil de commande, sous forme de valeur temporelle et/ou de valeur en pourcentage.

11. Procédé selon la revendication 1,
dans lequel au moins certaines de la pluralité de restrictions actuelles sont mémorisées sous forme de tableau, en particulier sous forme de tableau variable.

12. Support de stockage non volatile, lisible par ordinateur, sur lequel est stocké un programme qui, lorsqu'il est exécuté sur un processeur d'un appareil de mesure de niveau de remplissage (100), amène l'appareil de mesure de niveau de remplissage (100) à exécuter les étapes selon l'une des revendications précédentes.

13. Appareil de mesure de niveau de remplissage (100) agencé pour mettre en œuvre un procédé selon l'une des revendications 1 à 11, ledit appareil de mesure de niveau de remplissage (100) présentant :

une partie frontale de capteur (110) conçue pour effectuer une mesure ;
une unité de commande et d'évaluation (120) conçue pour commander et/ou évaluer la mesure ; et
un minuteur (130) conçu pour surveiller une durée de mesure ($T_a$), un intervalle de mesure ($T_p$) et/ou un rapport cyclique de la mesure.

14. Appareil de mesure de niveau de remplissage (100) selon la revendication 13, dans lequel la partie frontale de capteur (110) présente une pluralité d'émetteurs et/ou de récepteurs.

**15.** Utilisation d'un appareil de mesure de niveau de remplissage (100) selon la revendication 13 ou 14 pour la mesure de niveau de remplissage, la détermination de topologie et/ou la détermination de niveau limite.

**Fig. 1**

**Fig. 2**

310 → 320 → 330

**Fig. 3**

405

410

420 → 430

440

−

**Fig. 4**

405

410

420 → 430

440

−

500

**Fig. 5**

600

| 602 |
|:---:|

| 604 |
|:---:|

| 606 |
|:---:|

| 608 |
|:---:|

| 610 |
|:---:|

| 612 |
|:---:|

| 614 |
|:---:|

**Fig. 6**

**EP 4 600 617 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200284640 A1